# EUROPEAN PATENT APPLICATION

(11) **EP 2 385 690 A1**
(43) Date of publication of application: **09.11.2011**
(21) Application number: 11151852.8
(22) Date of filing: 24.01.2011
(51) Int. Cl.: H04M 1/725, H04W 4/08, H04W 4/02

(54) **Communication system**

(30) Priority: 22.01.2010 NL 1037646; 15.12.2010 NL 2005862
(71) Applicant: Dieben, Ebo Paul, 5628 TE Eindhoven (NL)
(72) Inventor: Dieben, Ebo Paul, 5628 TE Eindhoven (NL)
(74) Representative: Hylarides, Paul Jacques

(57) **Abstract**

Various ways are disclosed for setting up communication between two or more entities which do not have any prior knowledge of each other by means of scanning machine readable codes. The communication may involve scanning by a first communication device of a first machine readable code, sending a first message including the first machine readable code to a server, and storing the same on the server. The communication may further involve the step of scanning by a second communication device of a second machine readable code from a physical object, receiving a message comprising the second machine readable code and determining if said second machine readable code matches with any of the stored first machine readable codes and if so storing an association between the communication devices on the basis of said machine readable codes.

## Description

The present invention relates to a method for enabling communication between a plurality of communication devices. The invention also relates to a system for enabling such communication.

Communicating entities have knowledge of each other, for example phone number(s), e-mail address(es), names or other references. If two devices have no prior knowledge of each other, how can they enter into communication? In the art, directory services are commonly used to find other entities. However, in a directory service entities have to publish data, for example names, nicknames or other references, to identify themselves. This is not always desirable as said references can be used by anyone having access to the directory service in an attempt to reach you. This puts a burden on the user to filter wanted from unwanted communication attempts. The invention addresses at least the following object: The enabling of communication between two or more communication devices. Various methods and apparatuses are disclosed for enabling communication between two or more communication devices by means of scanning of a machine readable code by said two or more communication devices.

According to a first aspect of the present invention a method for enabling communication between a plurality of communication devices is provided, the method comprising:
- scanning by means of a first communication device of a first machine readable code, preferably scanning the code from a physical object;
- sending by the first communication device a first message including said first machine readable code to a server;
- receiving by the server of the first machine readable code and storing the same;
- scanning by means of a second communication device of a second machine readable code, preferably scanning the code from a physical object;
- sending by the second communication device of a second message including said second machine readable code, to the server;
- receiving by a server of the second message from the second communication device;
- determining if said second machine readable code matches with any of the stored first machine readable codes and if so storing an association between at least the first and second communication device.

The physical object may be the same object, for instance a letter forwarded from a first user of the first communication device, to a second user of the second communication device. In other embodiments the physical objects scanned by the first and second communication device are different objects.

In an embodiment the server forwards messages comprising said machine readable code received from any of the two or more communication devices to the one or more other communication devices associated with the machine readable code based on the associated machine readable codes. In other embodiments the first message comprises a first unique identifier, the first unique identifier being associated with the machine readable code. Similarly, the second message may comprise a second unique identifier. The unique identifiers may or may not be stored by the server (on the same server or on another storing device). The unique identifiers may comprise the communication address (for instance IP address) of the communication device. Instead of the machine readable code or in addition to the machine readable code the unique identifiers may be forwarded from one communication device to the other.

In further embodiments of the invention the one or more messages forwarded to the first and/or second communication device are free from any information directly identifying the sending communication device, for instance the communication addresses, for instance for privacy reasons.

The unique identifier may be generated by the communication device itself and/or may be generated by the server when the machine readable code is scanned.

Once the association between the machine readable codes has been stored, the method may involve establishing communication between the first and second communication device via the server, at least when the first and second machine readable codes show a match.

According to another aspect of the invention a method is provided for for enabling communication between a plurality of communication devices, the method comprising:
- receiving by a server of a first message including a first machine readable code, the first machine readable code having been scanned by means of a first communication device and sent by the first communication device to the server;
- storing the message on the server;
- receiving by the server of a second message including a second machine readable code, the second machine readable code having been scanned by means of a second communication device and sent by the second communication device to the server;
- determining if said second machine readable code matches with any of the stored first machine readable codes;
- if the machine readable codes match, storing an association between at least the first and second communication device on the server.

According to another aspect of the invention a system for enabling communication between a plurality of communication devices is provided, the system comprising:
- a first communication device configured so as to scan a first machine readable code and to send a first message including said first machine readable code to a server;
- a second communication device configured so as to scan a second machine readable code and to send a second message including said second machine readable code to a server;
- a server configured so as to receive the scanned first machine readable code and to store the same, the server furthermore being configured to receive the second message from the second communication device and to determine if said second machine readable code matches with any of the stored first machine readable codes and if so storing an association between at least the first and second communication device.

Further characterizing features, details and advantages of embodiments of the method and/or apparatus according to the present invention are apparent from the following description, the claims and the figures.
Figure 1: A system comprising two communication devices communicating with other via server.
Figure 2: A system comprising a multicast configuration.

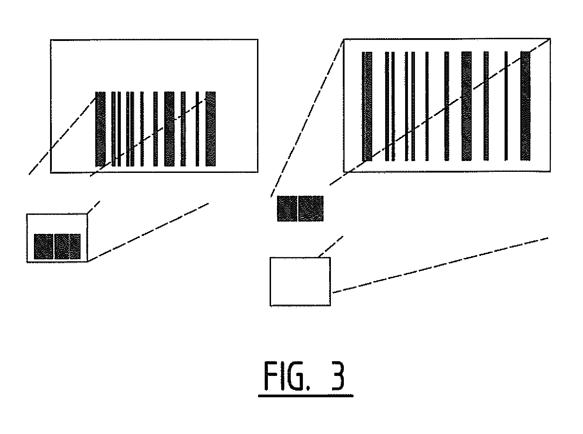

Figure 3: Changing size of machine readable code in a movie to accommodate scanning.

Methods and corresponding apparatuses are disclosed for enabling communication between two or more communication devices wherein a machine readable code is made available to two or more communication devices. In an embodiment of the invention at least two or more communication devices scan said machine readable code and send a first message comprising at least said machine readable code to a server.

The server receives the two or more first messages and stores an association between two or more communication devices on the basis of the machine readable codes. The server forwards messages received from any of the two or more communication devices to the one or more other communication devices associated with the machine readable code.

An advantage of the above method is that no pre-registration at a directory service is required.

There are various ways for making machine readable codes available to two or more communication devices:
A machine readable code could be printed on a letter, a post card or a package and sent by means of the letter, post card or package from a first user of a first communication device to a second user of a second communication device by means of physical mail. The advantage of using mail is that communication devices can reside on different locations.

A machine readable code may be printed on billboards or projected on movie screens. This allows the scanning from a distance by a plurality of communication devices at the same time. In doing so, a large crowd can quickly connect into communication. In order to allow scanning from different distances the size of the machine readable code might be varied over time.

Machine readable codes may be printed on beer mats, beer coasters, small cards or small products, bottles or cans such that they easily can be passed by hand to other people. In particular, a beer mat has been used in the passed to pass information between people. The advantage of handing a beer mat or other product comprising a machine readable code to another person is that one can see and possibly identify the person with which a communication is initiated. A further advantage of passing an electronic message via a beer mat comprising a machine readable code, is that the beer mat is not written upon and can be reused a plurality of times for passing different information between different sets of communication devices.

Machine readable codes may be printed in a plurality of newspapers, magazines, books or products which are distributed among a plurality of people, allowing the people to get into contact with each other regarding the content of the newspapers, the advertisements, the magazines or books or details of products.

Machine readable codes can be displayed on the screen of a communication device, such that the machine readable code can be scanned from the display by another communication device. Through visual scanning, information, i.e. a barcode image is transferred from a first device to a second device without the need of a physical or wireless network connection. Other ways of making machine readable codes available to two or more communication devices can be envisaged.

There are various types of machine readable codes and various ways for scanning those machine readable codes depending on their type.

A machine readable code could be a barcode (1D- or 2D-barcode), which could be scanned visually by a barcode scanner, a photo camera or video camera. The advantage of scanning by means of a barcode scanner is that it requires less light and that it is faster then scanning by means of a camera. Software for scanning barcodes with cameras in communication devices are know from the art. Other visual codes can be envisaged such as logo's, a pictures or text, for example a URL. A barcode does not have to be one of the standardized barcodes. In fact a dedicated barcode format could be used in combination with the camera for example with less digits to facilitate the scanning. The advantage of visual scanning is that no network connection is needed to obtain the barcode image.

Other types of machine readable codes can be envisaged such as RFID tags. Such tags can be read using an RFID reader. Advantage if RFID little or no light is required to scan an RFID tag. RFID scanning does not need a network connection to scan RFID tag data.

There are various ways for sending messages from a communication device to a server. The communication device is not limited to a mobile phone. Communication devices supporting communication protocols such that they can connect to the internet and comprising a barcode scanner, or a photo camera or video camera or other visual scanning means for scanning machine readable codes qualify. Not limiting examples of protocols include: Bluetooth, Wifi, GSM, wireless internet. Not limiting examples of communication devices include mobile phones, touch screen phones, PDAs, photo cameras, video cameras, mp3 players, IPods, printers / scanners, memory sticks.

The content of the message from the communication device to the server may vary. The first message typically comprises the machine readable code or a derivation of the machine readable code from which the machine readable code can be reconstructed. The scanned machine readable code might be interpreted and transformed into a string. A scanned image might be passed to the server as an image. Strings or text identifiers require less message transmission capacity than images. Hence, transformation of a machine readable code to string saves transmission capacity. Furthermore text identifiers facilitate further processing by the server in particular efficient searching for a match. A barcode image can be transformed into a string in a straightforward manner without information loss.

The first message sent by a communication device to the server may further comprise a first unique identifier. Said first unique identifier may be generated by the communication device or obtained from the server. Generation of the unique identifier by the communication device reduces the traffic between server and the communication device. Generation of the unique identifier by the server simplifies the design of the communication device and allows the server to manage the generation of unique identifier in a way that allows a more efficient retrieval of the identifiers. Said unique identifier can be used by the communication device to identify a connection between the first and the one or more other communication devices. Hence when such a unique identifier is available the machine readable code is not needed by the communication device to identify the connection. Subsequent messages sent via the connection do not need to comprise the machine readable code with which the connection was initiated. Not sending the machine readable code twice or more saves network transmission capacity. Furthermore, the machine readable code can be reused by other users to initiate a connection between them.

The first message sent by a communication device to the server may further comprise a first address and optionally first content. The first address enables the server to send a message to the communication device. The first content can be text, a photo, a file, a URL or other addresses of the communication device. Other content can be envisaged.

The various ways for associating two or more communication devices on the basis of first messages depends on the content of the first messages.

If the first messages only comprise a machine readable code the two or more communication devices can be associated with the machine readable code. When a message comprising a machine readable code is received the server matches the machine readable code with the stored machine readable codes. If no match is found the server stores the new machine readable code and an association with at least a first address of the communication device. If a match is found the communication device, at least a first address of the communication device, is associated with the machine readable code. The message comprising the machine readable code is forwarded to all the communication devices associated with the machine readable code using the first addresses of the communication devices.

In further embodiments the first messages may comprise a machine readable code and a (generated) unique identifier. When a message comprising a machine readable code and a unique identifier is received the server matches the machine readable code with the stored machine readable codes. When the machine readable code is new the server stores the message data, including the machine readable code, the unique identifier and at least a first address of the communication device. In case of a match the server stores in a database, an association between the second unique identifier and the first unique identifier.

The server forwards messages comprising the first unique identifier and first content received from a first communication device to the second communication device by replacing the first unique identifier with the second unique identifier and vice versa forwarding messages comprising the second unique identifier and second content received from a second communication device to the first communication device by replacing the second unique identifier with the first unique identifier.

In other embodiments a connection could be identified by means of a single unique identifier which is forwarded with all messages. There are various ways of making this single identifier available to all communication devices involved in the particular connection. Both the use of a single or a plurality of unique identifiers allows for reuse of the machine readable code. The machine readable code is not used to link the messages to a connection and does not need to be comprised in any further message once the connection is established.

The use of unique identifiers have further advantages. Only a limited amount of machine readable codes are needed. Moreover, it minimizes the chance of unsuccessful connection attempts because the machine readable code was already used. Hence, this decreases potentially unsuccessful network usage. Location information, such as GPS information or time stamps can be used to further ensure that two identical machine readable codes will not interfere with each other. A machine readable code is either free or associated with one user only. Once associated with a second user, it is set free again. Said machine readable code can now be used again by another user.

Upon scanning of a machine readable code a user is presented a choice between setting up a new connection or joining an existing one which is open to new participations.

The communication devices may comprise software to manage connections. Multiple connections can be initiated by means of a single machine readable code. A person scanning a machine readable code may specify that he want to set up a new connection on the basis of the machine readable code or make selection from a set of visible connections associated with the same machine readable code. Visible connection might deny access. Connections may also be invisible. To be able to discriminate between various visible connections further data may be associated to connections such for example time of creation, GPS location, name or a label. Names, labels or passwords could passed together with the machine readable code from a first person to another. Furthermore, to identify connection of a communication device further identification information of other communication devices devices can be associated to the connection, for example: a name, a photo, a URL, a phone number, a mail address, an e-mail address.

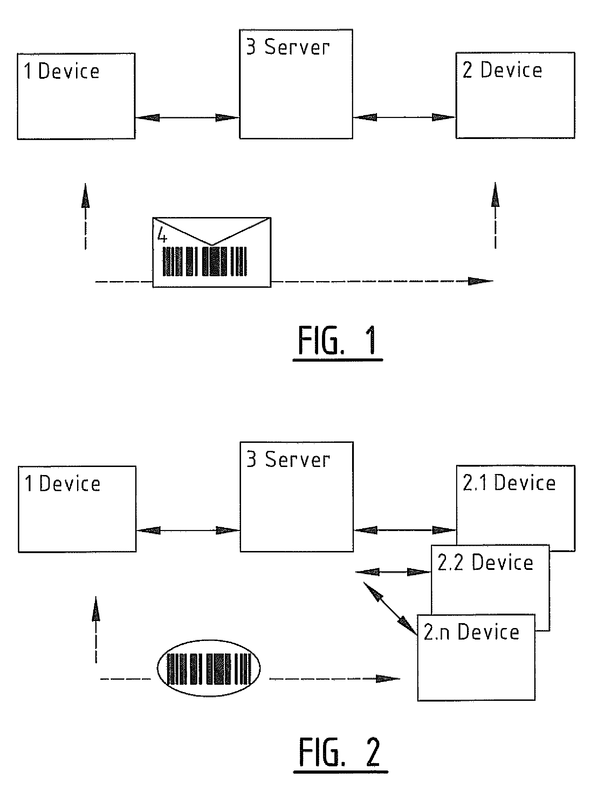

A first embodiment is described with reference to figure 1. An object 4, more specifically a letter, package or postcard, provided with a first machine readable code, is scanned by a first communication device of a first user. The first communication device 1 is adapted to scan machine readable code. For instance, the first communication device may be a barcode scanner.

The code associated with the machine readable code or at least a unique identifier representative of the machine readable code is sent, together with a communication address (for example a first IP-address, and/or a first e-mail address and/or a first phone number of the first communication device) to a server 3. The server 3 associates the machine readable code with a unique identification and the communication address, i.e. with one or more of the first phone number (and/or ip-address) and/or e-mail address. The server returns the unique identification to the first communication device 1. The first communication device 1 may then send one or more chat, e-mail or sms messages to the server 3 comprising at least the unique identification.

The letter, postcard or package subsequently handed or sent by physical mail to a second user. The machine readable code on the object 4 is then scanned by a second communication device 2 of a second user. The second communication device 2 is adapted to scan the machine readable code. For instance, the second communication device is a barcode scanner, as such known in the art. The machine readable code is sent together with a second address, for instance a second IP-address and/or a second e-mail address and/or second phone number of the second mobile device to the server 3. The server obtains the unique identification associated with the machine readable code and associates the second e-mail address and or phone number (and / or IP-address) with the unique identification. An advantage of said sending of the letter, postcard or package comprising the machine readable code is that the scanning devices can be on remote locations.

The server forwards the one or more messages each including the unique identification sent by the first mobile communication device to the second communication device. The second communication device sends one or more messages each including the unique identification to the first communication device.

In an embodiment of the invention the server does not forward any identification data of the first communication device, the first IP-address and/or first e-mail address and/or first phone number to the second communication device and vice versa, i.e. the server does not forward any identification data of the second communication device, the second IP-address and/or second e-mail address and/or second phone number to the first communication device. This could be implemented by the server pretending to be the sender. The server replaces the address of the sender with the address of the server before forwarding the message to intended receiver. This ensures anonymous communication and increases the privacy.

Communication of a certain type between a first user and a second user can be prevented without having to change any IP-address or e-mail address or phone number by simply removing at the server the association of either one or more of the first addresses and/or one or more of the second addresses with the unique identification. This facilitates spam management.

The generation of the unique identification allows reuse of the machine readable code. When the machine readable code is scanned by two users it can be reused by subsequent users. This solves the problem of having to throw away and print new machine readable codes. This is typically useful when the machine readable code is printed on an object that is available in a public space. An example of such object is a beer mat. Furthermore only a limited amount of machine readable codes are needed. Moreover, it minimizes the chance of unsuccessful connection attempts because the machine readable code was already used. Hence, this decreases potentially unsuccessful network usage. Location information, such as GPS information or time stamps can be used to further ensure that two identical machine readable codes will not interfere with each other. A machine readable code is either free or associated with one user only. Once associated with a second user, it is set free again. Said machine readable code can now be used again by another user.

Upon scanning of a machine readable code a user is presented a choice between setting up a new connection or joining an existing one which is open to new participations.

Alternatively, if a unique machine readable code is used, the steps of generating a unique identification could be avoided. This may typically possible in the case of postcards or letters. A unique machine readable code would also-suffice in the case of a multicast configuration in which new participants connect to the 'owner' of the unique machine readable code.

In a further embodiment, two unique identifiers can be generated. A first unique identifier is sent to the first communication device and the second unique identifier is sent to the second communication device. This ensures that on the basis of message identifiers alone two communication devices can not be related. When the content of the message to the receiver is adapted at the server such that it can not be matched with the content of the message sent by the sender, it is even more difficult to relate two devices on the basis of messages. Adapting is typically implemented using encryption. The server in a protected environment knows which communication devices communicate with each other. This improves privacy.

In a further embodiment the generation of unique identifiers is taken care of by the communication devices instead of the server. This decreases the traffic between the server and the communication devices for setting up a connection. In this embodiment the first communication device scans the machine readable code and generates a first unique identifier. If the first communication device would scan the machine readable code twice a second unique identifier would be generated and sent to the server. Various ways for the generation of unique identifiers are known in the art. The first communication device sends a message including first content, the machine readable code and the first unique identification and one or more of a first IP-address, a first e-mail address and/or a first phone number of the first communication device to the server. The server associates the machine readable code with the unique identification and one or more of the first phone number (and/or first ip-address) and/or first e-mail address and stores this association for later use.

The letter or product (for example a beer can or beer bottle) or beer mat/coaster comprising the printed machine readable code is put into the possession of a second user. A second communication device scans the machine readable code and generates a second unique identification. The second communication device sends a message including second content, the machine readable code and the first unique identification and one or more of a first IP-address, a first e-mail address or a first phone number of the first communication device to the server. The server responds by sending the first content to the second communication device, for instance via chat using the second IP-address, or via SMS using the second phone number or via e-mail using the second e-mail address.

Further messages can be sent from the first communication device to the second and vice versa. The first communication device includes the first identifier in every message it wants to send to the second communication device via the server. The server uses the second identifier to forward the message to the second communication device. The server does not forward any of the communication addresses of a first party to any other party.

The first and second communication device now have an anonymous communication channel through which further messages can be sent from the first communication device to the second communication device and vice versa.

Both the first and the second communication device can each stop the communication without running the risk that the other party can still reach them through one of their own communication addresses. Stopping is implemented by simply requesting the server to remove the associations that built the communication channel.

Further security measures could be taken by the first communication device. The first communication device could configure that the scanning of the (unique) machine readable code by a second communication device will only result in a connection if further constraints specified by the first communication device during the configuration of the first message are fulfilled. Not limiting examples of constraints include location (GPS), time frame, communication addresses of the second communication device, such as phone number.

If the first communication device knows at least one of the communication addresses of the second communication device, the communication is not entirely anonymous although the second communication device may still not know any of the communication addresses of the first communication device. It is evident that in such cases the known address can be used to test whether the intended user is indeed reached.

Other implementations could include the option that the server returns some kind of generated password which can be combined with the machine readable code when passing the physical object with the printed machine readable code to another communication device, to allow the other communication device to scan the machine readable code and password. The password is used by the server as an additional check. The password is used only once.

To prevent a third communicating device from using the unique generated code this code may be kept invisible. In other embodiments a check could be carried out by the server to see whether indeed the first unique identifier matches with the communication address of the first communication device, i.e. the sender. Hence, even if a third party would obtain the first unique identifier the party would not be able to send a message to the second communication device because the sender address would not match. Further encryption may be used in the communication between the communication devices and the server to ensure that the identification data is not publicly available.

Another embodiment provides a means of a first user / communication device / server to communicate with a large group of communication devices. One unique machine readable code is presented to a group of people. A typical implementation includes a machine readable code printed on a large bill board or projected on a movie screen in a cinema, or on monitors or TV screens. Such machine readable codes could also be printed on flyers, leaflets, tickets et cetera. Hence, the same unique code might be scanned by large group of people simultaneously or in parallel.

This facilitates first of all fast and efficient distribution of the machine readable code and secondly the set up of a multicast channel from the first communication device to all other communication devices that scanned the machine readable code. In this solution there is no confusion as to which communication device is to be connected to which communication device since all communication devices will set up a connection with the first communication device. The first communication device may still be kept in the dark as to the addresses of the other communication devices when an intermediary server is used. This is typically useful for temporary communication for example during an event, conference, music festival et cetera. Messages by the organisation of the event can be passed to each communication device that scanned the unique machine readable code.

The method of this embodiment may include the following steps:
A first communication device generates a unique machine readable code and sends it to a server to be used to setup a multicast communication channel.
Said unique machine readable code is exposed to a group of communication devices.
Said group of communication devices scan the unique machine readable code and send the unique machine readable code to the server.
Said server stores communication address details of the communication devices and associates the communication addresses with the unique machine readable code.
Said first communication device sends via the server one or more messages to one or more of the communication devices.
Said communication devices present the messages.

Figure 4 shows the projection of machine readable codes on a movie screen the size of the projected code may differ during time to allow communication devices without zoom capabilities to have a proper scan of the code depending on their distance to the screen.

In a further embodiment a web page may be opened when a unique barcode is scanned from a product, for example a beer mat, a library book, or a letter or fax or e-mail. The web page comprises a forum, a bulletin board, means to upload messages comprising time and location information and optionally photo's. When the product is subsequently moved and scanned and moved. The web page will show the history of the physical object or product.

Everyone can post messages. Messages can be reacted upon. This embodiment may include a subscription of communication devices, which previously scanned the machine readable code, to changes on the web page.

A further embodiment may be based on SMS. An advantage of the below method is that no new client software is needed the client is implemented by human activities.

A method would comprise the steps of:
Sending an SMS to a server requesting a first unique identifier
Receiving an SMS comprising the first unique identifier from the server.
Storing the first unique identifier.
Presenting the first unique identifier as a machine / human readable code on the display.
Scanning the first unique identifier by a second communication device from the display of the first communication device.
Sending by the second communication device an SMS including at least the first unique identifier to the server.
Sending by and receiving from the first and second communication device zero or more messages comprising the unique identifier.

A corresponding server would typically carry out the following method steps:
Receiving from a first communication device an SMS requesting a first unique identifier
Sending an SMS to the first communication device an SMS comprising the first unique identifier.
Storing the first unique identifier in combination with the phone number of a first mobile communication device. Receiving an SMS comprising a second unique identifier by a second communication device.
Determining if the second unique identifier is stored as a first unique identifier.
Associating and storing the phone number of the second communication device with the first unique identifier. Setting up a communication channel between two or more mobile phones by forwarding messages comprising the unique identifier, received from a first communication device of the two or more communication devices to the one or more communication devices using their respective phone numbers and vice versa forwarding messages, comprising the unique identifier, received by the one of the one or more second communication devices to the first communication device, without forwarding the telephone number of the first or the second communication device.

In a further embodiment the second communication device is a printer connected to the internet comprising means for scanning a machine readable code, preferably a 1d or 2d barcode. A communication channel is created between the printer and the first communication device. The first communication devices sending messages via the server to the printer. The messages including documents to be printed. Alternatively the barcode scanner can be used to scan printed barcodes from documents. The printer further comprising means to request a server for the document identified by the barcode such that it can be printed. The printer is now effectively turned into a copier with the advantage that scanning of the documents is no longer needed. Hence, copiers can be created without the need of scanning equipment. Furthermore a damaged original will come out clean.

Documents that are printed via the server are provided with a unique machine readable code by means of the printer driver. Hence, the printer driver is adapted such that it will generate a unique machine readable code or request a unique machine readable code from the server at the time of printing. The printed document, typically in PDF format, includes the unique machine readable code, possible on every page. The PDF document including the unique machine readable code is stored at the server for subsequent retrieval by communication devices or printers when requested to do so on the basis of providing the unique machine readable code. Further access right management can be included in the system such that documents can only be printed under certain conditions. Mobile communication devices can request the server to print a document. The server will send to the mobile communication device a machine readable code which can presented on the screen of the mobile communication device. The server may use identification information of the mobile device to authenticate and authorize the printing of the document by the requestor. The mobile device displaying the machine readable code, is presented to a scanner preferably included or possibly connected to the printer. The printer or scanner further including means for requesting from the server a printable document identified by the machine readable code.

Communication devices adapted to carry out any of the above described methods typically comprise scanning capabilities. These include a barcode scanner, a photo camera, a video camera. Communication devices are not limited to mobile phones. Portable communication devices supporting wireless communication protocols such that they can connect to the internet are sufficient. Not limiting examples of protocols include: Bluetooth, Wifi, GSM, wireless internet. The portable communication devices preferably comprising means for visually scanning machine readable codes. Other embodiments may include a RFID scanner for scanning RFIDs. Not limiting examples of communication devices include mobile phones, touch screen phones, PDAs, photo cameras, video cameras, mp3 players, IPods, printers / scanners.

All preferred embodiments have been constructed with visual scanning techniques. The advantages of visual scanning are clear. It is fast and widely available. Most communication devices comprise a photo camera which can be turned into a barcode scanner by means of proper software.

It also foreseen that the (unique) machine readable code could be inputted manually by users of the communication devices. This is typically suitable in case of an SMS based implementation. However, especially when the machine readable code is a 2d barcode manual input is an undue burden. For this reason a 2d barcode could be accompanied by a string of letters and digits.

The scanning of machine readable codes could also be extended to RFID tags and RFID scanners. Advantages of RFID tags are that they cannot be copied that easily and provide further security advantages. A disadvantage is that RFID requires more complex scanning capabilities of the communication devices and more important RFID can not be printed easily on products, letters, beer mats et cetera. Furthermore a plurality of RFID tags might scream for attention at the same time. This problem does not present itself with visual machine readable codes as a user initiated action is needed.

In another embodiment digital data could be pre-linked to a product such as a beer mat. Said digital data could include websites, music (mp3 files), menus, photos et cetera. When scanning the machine readable code of the beer mat this data is made available immediately to the scanning communication device. In a further embodiment a server could be informed of the selected information and act upon the selection accordingly. Further embodiments may include ordering drinks or music through a beer mat. Further embodiments include server and communication devices adapted to carry out the claimed methods, machine readable media comprising software which when executed on a communication device carries out any of the communication device methods and/or comprising software which when executed on a server carries out any of the server methods.

Further embodiments comprise products comprising machine readable codes and instructions for enabling any of the methods. In particular, the product may be a beer mat, a letter, a postcard, an e-mail, a beer bottle, a ticket, a movie comprising a machine readable code which can be scanned by a communication device, etc.

In embodiments of the invention a method is provided for enabling communication between a plurality of communication devices, the method comprising:
- scanning by means of a first communication device of a first machine readable code, preferably scanning the code from a physical object;
- sending by the first communication device a first message including the first machine readable code to a server;
- receiving by the server of the first machine readable code and storing the same;
- scanning by means of a second communication device of a second machine readable code, preferably scanning the code from a physical object;
- sending by the second communication device of a second message including the second machine readable code, to the server;
- receiving by a server of the second message from the second communication device;
- determining if the second machine readable code matches with any of the stored first machine readable codes and if so storing an association between at least the first and second communication device, the method further comprising scanning the machine readable code visually, for instance from one of a letter, a postcard, a fax, a beer mat, a physical product, a can, a bottle, a screen of a portable communication device and wherein said letter, a postcard, a fax, a beer mat, a physical product, a can, a bottle, a screen of a portable communication device is put into the possession of a second user associated with the second communication device.

The machine readable code may be a photo from picture or a logo. The message further includes location information and/or time information to facilitate the matching of said machine readable codes at the server.

The machine readable code may be scanned using one of a photo camera, a video camera, a barcode scanner comprised in the communication device.

The invention also relates to a system comprising a server, a first communication device and a second communication device, a first communication channel between the first communication device and the server and a second communication channel between the second communication device and the server, herein the system is configured to carry out the method as claimed in any of the appended claims. The communication channel may be formed by a wired or wireless connection or a combination thereof.

The machine readable code may be projected or displayed, for instance on a movie screen, and can be scanned, while being projected or displayed, by a communication device.

The above list of embodiments can be carried out in varying combinations of software and hardware. The scope is defined by the claims.

## Claims

**1.** Method for enabling communication between a plurality of communication devices, the method comprising:
- scanning by means of a first communication device of a first machine readable code, preferably scanning the code from a physical object;
- sending by the first communication device a first message including the first machine readable code to a server;
- receiving by the server of the first machine readable code and storing the same;
- scanning by means of a second communication device of a second machine readable code, preferably scanning the code from a physical object;
- sending by the second communication device of a second message including the second machine readable code, to the server;
- receiving by a server of the second message from the second communication device;
- determining if the second machine readable code matches with any of the stored first machine readable codes and if so storing an association between at least the first and second communication device.

**2.** Method according to claim 1, further comprising:
- forwarding by a server of messages comprising said machine readable code received from any of the two or more communication devices to the one or more other communication devices associated with said machine readable code based on the associated machine readable codes.

**3.** Method according to claim 1 or 2, wherein said first message further comprises a first unique identifier and wherein said first unique identifier is associated with said machine readable code and stored by said server; and/or wherein said second message further comprises a second unique identifier, the second unique identifier being associated with said machine readable code and stored by said server.

**4.** Method according to claim 3, further comprising:
- forwarding by the server of one or more messages comprising at least said first unique identifier to said second communication device; and/or
- forwarding by the server of one or more messages comprising at least said second unique identifier to said first communication device.

**5.** Method as claimed in any of the previous claims, wherein the unique identifier comprises the communication address of the communication device.

**6.** Method as claimed in claim 4, wherein the one or more messages forwarded to the first and/or second communication device do not contain the communication addresses of the respective communication devices.

**7.** Method according to any of the claims 3-6, wherein the unique identifier is generated by the communication device and/or by the server when said machine readable code is scanned.

**8.** Method according to any of the preceding claims, comprising scanning the machine readable code from a display device, for instance a movie screen, a billboard, and/or a television screen, the method preferably further comprising simultaneously scanning the machine readable code by a plurality of communication devices.

**9.** Method according to claim 8, wherein the size of the machine readable code changes over time when displayed on a display device to allow scanning from different distances.

**10.** Method as claimed in any of the previous claims, comprising establishing communication between the first and second communication device via the server when the first and second machine readable codes match.

**11.** Method for enabling communication between a plurality of communication devices, preferably in a method as claimed in any of the preceding claims, the method comprising:
- receiving by a server of a first message including a first machine readable code, the first machine readable code having been scanned by means of a first communication device and sent by the first communication device to the server;
- storing the message on the server;
- receiving by the server of a second message including a second machine readable code, the second machine readable code having been scanned by means of a second communication device and sent by the second communication device to the server;
- determining if said second machine readable code matches with any of the stored first machine readable codes;
- if the machine readable codes match, storing an association between at least the first and second communication device on the server.

**11.** Method as claimed in claim 11, comprising:
- receiving the two or more first messages comprising at least a first machine readable code;
- storing an association between two or more communication devices on the basis of said machine readable codes;
- forwarding messages comprising said machine readable code received from any of the two or more communication devices to the one or more other communication devices associated with said machine readable code.

**12.** Software when executed on a communication device and/or server carries out the method according to any of the previous claims.

**13.** System for enabling communication between a plurality of communication devices, the system preferably being configured to perform the method as claimed in any of the claims 1-11, the system comprising:
- a first communication device configured so as to scan a first machine readable code and to send a first message including said first machine readable code to a server;
- a second communication device configured so as to scan a second machine readable code and to send a second message including said second machine readable code to a server;
- a server configured so as to receive the scanned first machine readable code and to store the same, the server furthermore being configured to receive the second message from the second communication device and to determine if said second machine readable code matches with any of the stored first machine readable codes and if so storing an association between at least the first and second communication device.

**14.** System as claimed in claim 13, wherein the server is configured to establish a communication between the first and second communication device if an association between the machine readable code has been stored.

**15.** Server or communication device from a system as claimed in claim 13 or 14.
